# EUROPEAN PATENT SPECIFICATION

(11) **EP 4 540 053 B1**
(45) Date of publication and mention of the grant of the patent: **18.02.2026**
(21) Application number: 23736476.5
(22) Date of filing: 16.06.2023
(51) Int. Cl.: B29D 30/00, G06K 7/00

(54) **METHOD AND SYSTEM FOR TESTING THE RESILIENCE OF AN ELECTRONIC DEVICE THAT IN USE IS SUBJECTED TO PERIODIC DEFORMATIONS AND THAT IS INTENDED TO BE COUPLED TO AT LEAST ONE COMPONENT OF AN ELASTIC BODY, PREFERABLY A TYRE**
VERFAHREN UND SYSTEM ZUR PRÜFUNG DER ELASTIZITÄT EINER ELEKTRONISCHEN VORRICHTUNG ZUR KUPPLUNG AN MINDESTENS EIN TEIL EINES ELASTISCHEN KÖRPERS, VORZUGSWEISE EINES REIFENS
PROCÉDÉ ET SYSTÈME POUR TESTER LA RÉSILIENCE D'UN DISPOSITIF ÉLECTRONIQUE QUI EN UTILISATION EST SOUMIS À DES DÉFORMATIONS PÉRIODIQUES ET QUI EST DESTINÉ À ÊTRE COUPLÉ À AU MOINS UN COMPOSANT D'UN CORPS ÉLASTIQUE, DE PRÉFÉRENCE UN PNEU

(30) Priority: 17.06.2022 IT 202200012863
(43) Date of publication of application: 23.04.2025
(73) Proprietor: Bridgestone Europe NV/SA, 1930 Zaventem (BE)
(72) Inventor: CIAMPA, Mattia Antonio, 00128 Roma (IT); IOZIA, Francesco, 00128 Roma (IT)
(74) Representative: Marchetti, Alessio
(86) International application number: PCT/IB2023/056263
(87) International publication number: WO 2023/242816

(56) References cited:
- EP-A2- 1 867 498
- WO-A2-01/81886
- JP-A- 2009 139 329
- US-A1- 2011 074 549
- US-A1- 2021 148 790

## Description

### Technical sector

The present invention relates to a method and to a system for testing an electronic device that in use is subjected to periodic deformations.

The present invention finds advantageous application in testing the resilience of an electronic device that is intended to be coupled to a component of a tyre, whereto the following description will make explicit reference without therefore losing the generality thereof.

### Prior art

In recent years, so-called *"smart"* tyres have emerged, which are capable of forming an active part of modern vehicles, supplying information concerning the type of tyres mounted, information concerning the state of the tyres and also information concerning ambient and road conditions.

A *"smart"* tyre is normally equipped with a transponder (that is to say an electronic device suitable for communicating in radio frequency) which permits remote communication (that is to both the vehicle whereupon the tyre is mounted and to an operator who must carry out the checking or the replacement of the tyre in either using automatic systems or else in proximity to the vehicle itself) of the identification, the characteristics and the history of the tyre.

Recently, the integration has been proposed of RFID (*"Radio-Frequency IDentification"*) technology, based upon the presence of transponders, and TPMS (*"Tyre Pressure Monitoring Systems"*) technology, which measures the effective inflation pressure in order to store within transponders the effective inflation pressure and then remotely communicate the effective inflation pressure by means of the transponders themselves.

Generally, a transponder that is intended to be coupled to a tyre is first inserted into a rubber support (housing). Such a rubber support may completely incorporate the transponder on all sides or else also only partially. Subsequently, in order to couple a transponder to a tyre, it is possible to attach the transponder to an inner or outer surface of the tyre (typically above the innerliner which has the task of ensuring the air tightness of the tyre itself) or else it is possible to integrate the transponder into those components that constitute the structure of the tyre (i.e., arrange the transponder in the middle of the various layers that make up the tyre).

During use (that is to say when rolling over a road surface) at the part of the tyre that is found to be in contact with the road surface (constituting the so called "footprint on the ground") the tyre is subjected to continuous deformations of significant magnitude and, due to the rolling effect, the part of the tyre that is found to be in contact with the road surface varies continuously. Consequently, during use, a transponder that is coupled to a tyre component is subjected to the same cyclical deformations that the component is subjected to and therefore, in the long run, it may be subject to fatigue fracture (this is typically reflected as an interruption to the electrical continuity of the chip and/or to the radiofrequency transmission elements such as, for example, the antennas that are relatively large.

It is therefore necessary to test the effective resilience of a transponder (or other electronic device) that is coupled to a tyre component in order to be able to ensure that the transponder continues to function for the entire life of the tyre. Resilience tests are actually performed in constructing prototypes of the tyre that comprise the transponder (or other electronic device) and in performing duration tests using such prototypes; these types of tests, even though they are very efficient (that is to say that the exhibit high precision and high reliability), are, however, not very efficient insofar as they are very long in duration and are very costly (the manufacture of only a few tyre prototypes is a substantially manual operation with an extremely high associated cost).

The patent US8063742B2 describes a system for testing the resilience of an electronic device coupled to a tyre component, wherein the tyre component (centrally containing the electronic device) is engaged at the extremities and is cyclically made to slide around a succession of rollers arranged in sequence and defining a serpentine path; a reader is arranged alongside the rollers in order to cyclically interrogate the electronic device and to therefore determine if and when the electronic device stops functioning. This test system is efficient (that is to say that it makes it possible to perform tests over short periods of time and with reduced costs), but not particularly efficient insofar as the results supplied are not very precise and are not trustworthy (that is to say that the resilience measured by the test system is very often substantially different than the actual resilience to be encountered in tyres that are fitted to vehicles) insofar as those deformations that are cyclically applied to the component (centrally containing the electronic device) are different than those deformations whereto the same component is subject during the actual use of the tyre.

### Description of the invention

The object of the present invention is that of supplying a method and system for testing the resilience of an electronic device that in use is subjected to periodic deformations and that is intended to be coupled to at least one component of an elastic body, preferably a tyre, which method and system make it possible to efficiently (that is to say over short periods of time and with reduced costs) and effectively (that is to say with high precision and reliability) test the effective resilience of the electronic device taking into consideration the actual operating condition stresses.

According to the present invention a method and system are supplied for testing the resilience of an electronic device that in use is subjected to periodic deformations and that is intended to be coupled to at least one component of an elastic body, preferably a tyre component, according to that established by the attached claims.

The claims describe preferred embodiments of the present invention that form an integral part of the present description.

### Brief description of the drawings

The present invention will now be described with reference to the attached drawings, which illustrate an exemplary, non-limiting embodiment, wherein:
- Figure 1 is a schematic view and a transverse cross-sectional view of a tyre provided with a transponder;
- Figures 2 and 3 are, respectively, an undeformed view (unloaded) and a deformed view (loaded) of the tyre of Figure 1;
- Figure 4 is a schematic view of system for testing the resilience of an electronic device that is destined to be coupled to a tyre component.
- Figure 5 is a perspective view of a detail of the testing system of Figure 4; and
- Figures 6 and 7 are two schematic views of a detail of Figure 5 in two different instants of operation.

### Preferred embodiments of the invention

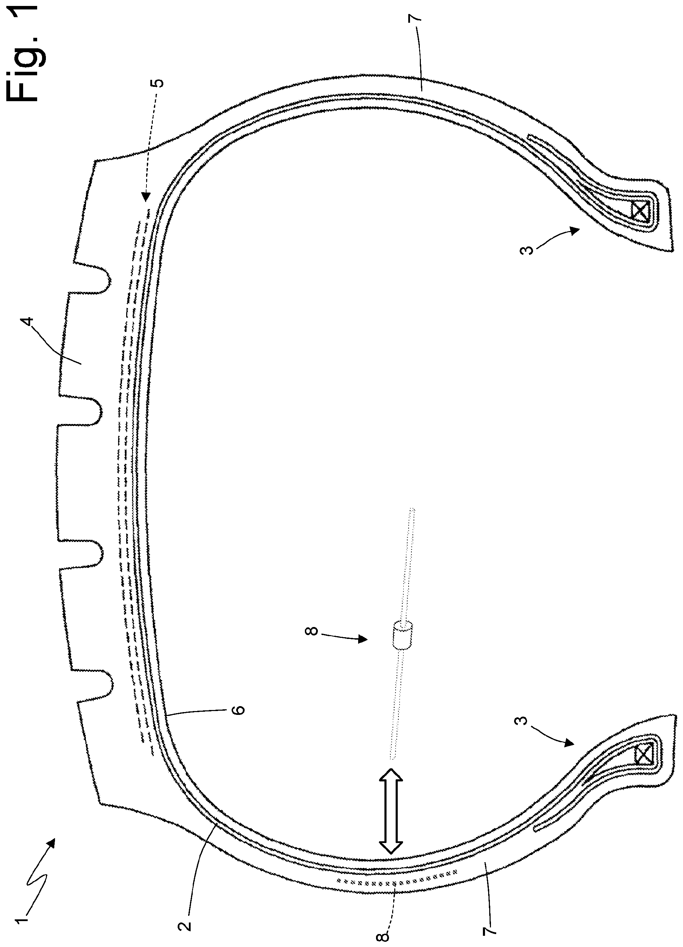

In Fig. 1, reference numeral 1 indicates as a whole a pneumatic tyre 1 comprising a toroidal carcass 2, which is partially folded onto itself and therefore has two lateral flaps (i.e., two layers superimposed on one another and jointly referred to as a *"turn-up").* Two annular beads 3 are provided at opposite sides of the carcass 2, wherein each thereof is surrounded by the carcass 2. The carcass 2 supports an annular tread 4 with the interposition of a tread belt 5. Arranged within the carcass 2 is an innerliner 6 which is airtight, constitutes an inner lining and has the function of retaining the air within the tyre 1 in order to maintain the inflation pressure of the same tyre 1 over time. The carcass 2 supports a couple of lateral walls 7, each of which links a bead 3 to the tread 4.

The tyre 1 is provided with a transponder 8, that is to say an electronic device (usually passive, that is to say devoid of an electrical power supply thereof but an active or semi-passive transponder is not to be excluded) that is capable of storing information and/or acquiring signals in relation to operating conditions or else the state of the tyre and it is capable of communicating by means of radio frequency. In other words, the transponder 8 is a *"smart label"* or intelligent sensor of small dimensions that is suitable for responding to remote polling on the part of specific fixed or portable devices, called readers (or polling devices); or else to autonomously transmit signals to a receiver; a reader or receiver is capable of reading and/or modifying the information contained within the transponder 8 communicating with the transponder 8 itself in radio frequency. Accordingly, the transponder 8 is part of a wireless reading and/or writing system that operates according to so-called RFID technology (*"Radio-Frequency IDentification"*).

According to what is shown in Figure 1, the transponder 8 is coupled to a lateral wall 7 of the tyre 1; according to other embodiments, not shown, the transponder 8 could be coupled to other components of the tyre 1, other than the lateral wall 7, such as, for example, parts beneath the tread 4 or the sides thereof.

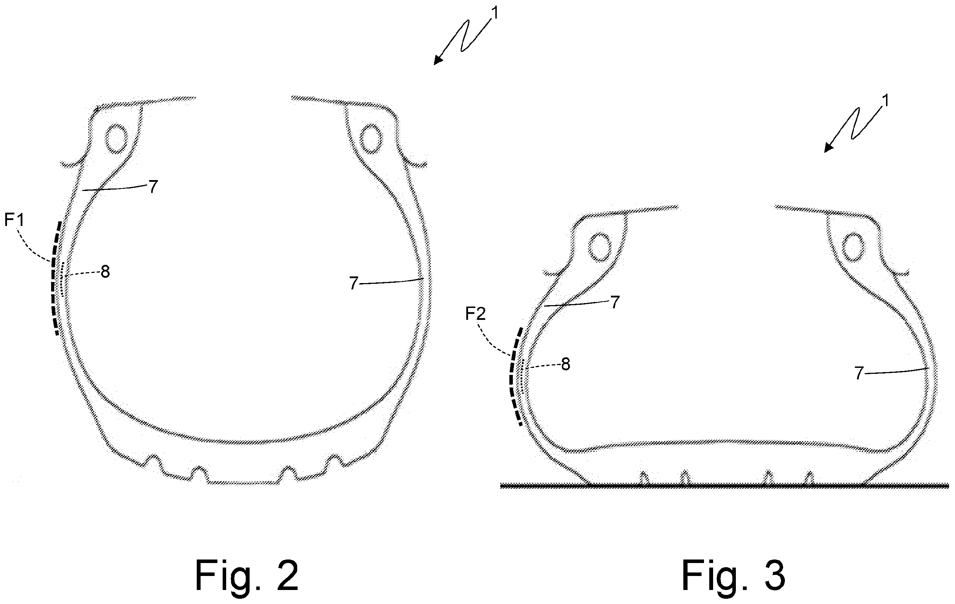

According to what is shown in Figures 2 and 3, during use (that is to say when rolling over a road surface) the tyre 1 is subjected to continuous deformations of significant magnitude at the part of the tyre 1 that is found to be in contact with the road surface (constituting the so called *"footprint on the ground"*) and, due to the rolling effect, the part of the tyre 1 that is found to be in contact with the road surface continuously varies. Accordingly, during use, the transponder 8 coupled to a component (in particular to a lateral wall 7) of the tyre 7 is subjected to the same cyclical deformations whereto the component is subjected (in particular the lateral wall 7). In Figure 2 a section of the tyre 1 is shown that is far from the road surface (that is to say from the so called *"footprint on the ground"*) and is therefore undeformed; in Figure 3 on the other hand a section of the tyre 1 is shown that is in contact with the road surface (that is to say at the so called *"footprint on the ground"*) and therefore deformed.

As shall be better clarified hereinafter, the tyre 1 is first analyzed in order to determine (typically using simulations that are possibly confirmed in analyzing actual images) how the tyre deforms three-dimensionally in use and generally under less favorable conditions, that is to say in the so called *"worst case"* (that is to say under *"extreme"* condition wherein the deformation is more accentuated and therefore with an elevated vertical load corresponding to the vehicle under full load and with reduced inflation pressure). In this way, beforehand, a three-dimensional form F1 is determined which the component (that is to say the lateral wall 7) containing the transponder 8) assumes in the tyre 1 when it is far from the footprint on the ground and a three-dimensional form F2 is also determined that the component (that is to say the lateral wall 7) containing the transponder 8 assumes in the tyre 1 when it is at the footprint on the ground. The three-dimensional form F1 has an average radius of curvature (in relation to the centerline of the section) that is greater than an average radius of curvature of the three-dimensional form F2; that is to say that the three-dimensional form F2 has a more pronounced curve (greater) than the three-dimensional form F1.

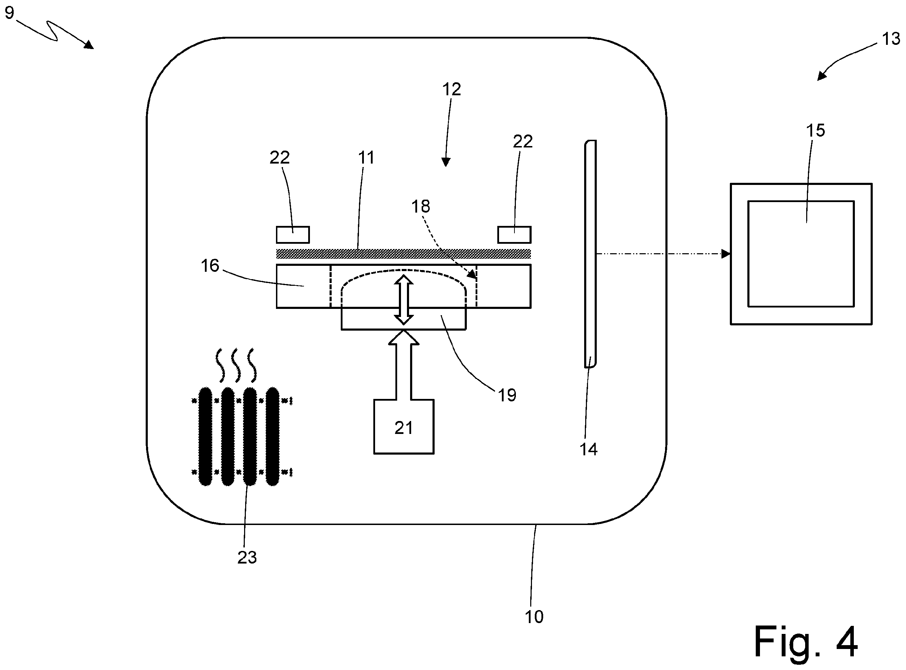

In Figure 4, with the reference numeral 9, a system is indicated, in the entirety thereof, for testing the resilience of the transponder 8 coupled to a component (in particular a lateral wall 7) of the tyre 1.

The test system 9 comprises a closed chamber 10 (provided with a door that may be opened) that, in order to be climate-controlled, is preferably thermally isolated (as will be better described hereinafter). The test system 9 uses a support (sample) 11 containing the transponder 8. In the embodiment shown in the attached figures, the support 11 has a rectangular form, but according to other embodiments not shown, the support 11 may also take other forms (for example a circular form, an elliptical form or else a polygonal form). In particular, the transponder 8 is preferably arranged within an area that is central to the support 11. According to a preferred embodiment the support 11 comprises a rubber housing that is composed of two layers of rubber that are joined together in order to enclose the transponder 8 therebetween, and it is the same rubber housing that is used in the production of the tyres 1 for coupling the transponders 8 to the tyres 1. In other words, in order to test the resilience of a transponder 8 that is intended to be coupled to a component (the lateral wall 7) of the tyre 1, the support 11 is implemented, which contains the transponder 8, which is preferably arranged within an area that is central to the support 11 itself.

The test system 9 comprises a deforming unit 12 that is arranged inside the closed chamber 9 and that is configured to subject the central area of the support 11 containing the transponder 8 (that is to say an area of the support 11 wherein the transponder 8 is arranged) to a series of cyclical deformations.

The test system 9 comprises a reader 13 that is configured to detect in radio-frequency the functioning of the transponder 8 during the cyclical deformations of the support 11. In use, the cyclical deformations of the support 11 are interrupted (that is to say that the test is terminated) when the reader 13 is no longer able to read the transponder 8 following a breakdown of the transponder 8. Typically, the reader 13 comprises an antenna 14 that is arranged inside the closed chamber 9 alongside the deforming unit 12 (in order to be in close proximity with the support 11 housed in the deforming unit 12) and a control device 15 arranged outside the closed chamber 9.

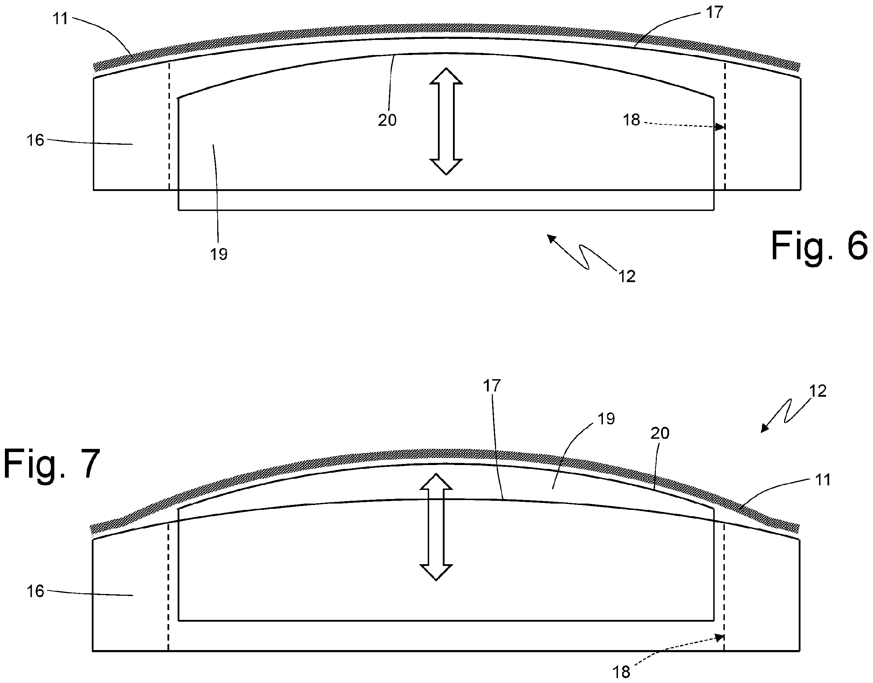

The deforming unit 12 is configured to cyclically deform the central area of the support 11, in such a way as to alternatively assume, at the central area of the support 11, the three-dimensional form F1 that the component (the lateral wall 7) assumes in the tyre 1 when far from the footprint on the ground and the three-dimensional form F2 that the component (the lateral wall 7) assumes in the tyre 1 at the footprint on the ground. In particular, the two boundary conditions assumed by the support 11 are shown in Figures 6 and 7; the support 11 (in schematic form) that assumes the three-dimensional form F1 is shown in Figure 6, whilst the support 11 that assumes the three-dimensional form F2 is shown in figure 7.

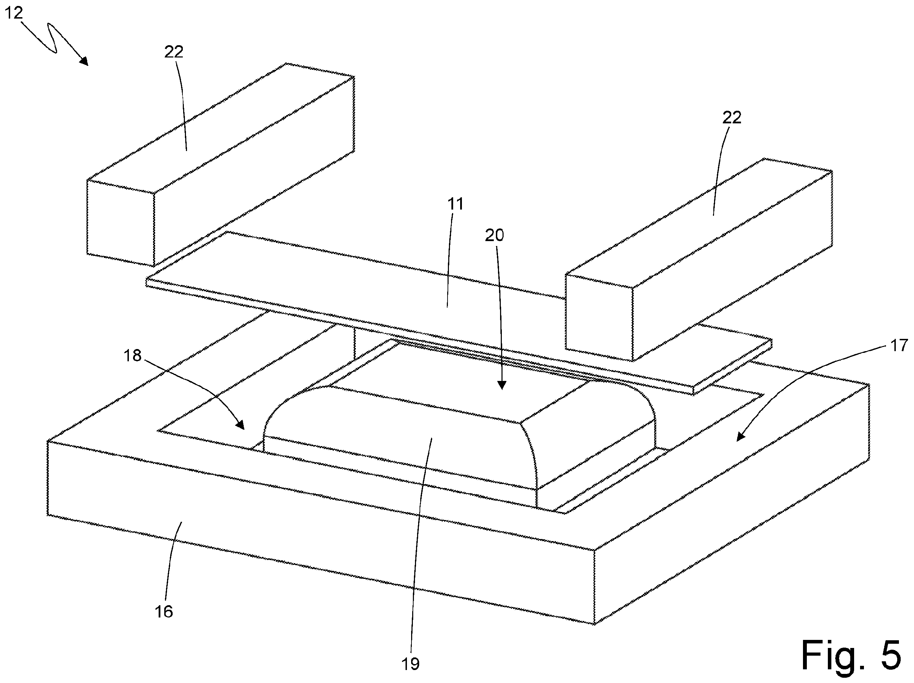

According to what is shown in Figures 4 and 5, the deforming unit 12 comprises a fixed base 16 (that is to say that when in use it does not perform any kind of movement) featuring a working surface 17 that reproduces the three-dimensional form F1. In particular, the fixed base 16 has the form of a rectangular frame having, centrally, a through opening 18 (of a rectangular form). According to other embodiments, not shown, the support 11 has a non-rectangular form and therefore, consequently, the fixed base 16 also has a non-rectangular form. The deforming unit 12 comprises a deforming body 19 having a working surface 20 that reproduces the three-dimensional form F2 and that faces the support 11; the deforming body 19 is arranged inside the through opening 18 of the fixed base 16, that is to say that it moves into the through opening 18 of the fixed base 16.

The deforming unit 12 comprises an actuator 21 that imparts an alternating movement (in the vertical direction) to the deforming body 19 that cyclically causes the deforming body 19 to press against the central area of the support 11 (that is to say the area wherein the transponder 8 is arranged) in order to deform the central area of the support 11. Therefore, in use, what is shown in Figures 6 and 7 is cyclically repeated: when the deforming body 19 is at the lowest point (retracted), the working surface 20 of the deforming body 19 does not touch the support 11 that is resting on the working surface 17 of the fixed base 16 and therefore assumes the form F1 (as shown in Figure 6), whilst when the deforming body 19 is at the highest point (raised), the working surface 20 of the deforming body 19 does not touch (pushes) the support 11 that is resting on the working surface 20 of the deforming body 19 and therefore assumes the form F2 (as shown in Figure 7). In other words, the alternating movement of the deforming body 19 cyclically deforms the central area of the support 11 in order cause the central area of the support 11 to alternatively assume the three-dimensional form F1 and the three-dimensional form F2.

According to a possible embodiment, the actuator 21 may be a permanent magnet electromagnetic shaker that has a similar structure to that of a loudspeaker and that comprises a coil that is mounted movable (in order to slide alternatively along a linear path) and that is immersed within an electromagnetic field that is generated by permanent magnets; when the coil is moved by an alternating electrical current it moves backwards and forwards at the same frequency as the alternating electrical current.

Initially, before activating the alternating movement of the deforming body 19, the support 11 is rested on the working surface 17 of the fixed base 16 that reproduces the three-dimensional form F1; subsequently the two ends of the support 11 are constrained to the fixed base 16 (that is to say the working surface 17 of the fixed base 16) by means of two respective retaining elements 22, wherein each thereof clamps the end of the support 11 against the fixed base 16 (that is to say against the working surface 17 of the fixed base 16). According to a preferred embodiment, each retaining element 22 is screwed to the fixed base 16 by means of a pair of screws. Once the support 11 has been rested upon and constrained to the working surface 17 of the fixed base 16, it is possible to activate the alternating movement of the deforming body 19 that cyclically causes the deforming body 19 to press against the central area of the support 11 in order to deform the central area of the support 11.

According to a preferred embodiment shown in Figure 4, the test system 9 comprises a heating device 23 (climate controller) that is configured in order to heat (or if necessary also to cool) the closed chamber 10 to a predetermined test temperature (generally in the order of 50-70 °C) in order to reproduce the internal temperature of the tyre 1 during use. According to a preferred embodiment, the heating (cooling) takes place by introducing warm (cold) air into the closed chamber 10.

In other words, the test system 9 subjects an area of the support 11, wherein the electronic device 8 is arranged, to a series of cyclical deformations in order to cause said area of the support 11 to alternatively assume the three-dimensional form F1 and the three-dimensional form F2. The two three-dimensional forms F1 and F2 are not *"causal",* but are exactly the two boundary forms that the component (the lateral wall 7) of the tyre 7 assumes in use.

The tyre 1 may be of any type, that is to say intended for automobiles, motorcycles, buses, trucks, vans, bicycles, work vehicles, agricultural vehicles, airplanes...

In the preferred embodiment described above, an electronic component 8 (for example a transponder, but not only a transponder) that is intended to be coupled to a tyre 1 component is subjected to a resilience test; the present invention may however find application in testing any type of electronic component that is subjected in use to periodic deformations, also within areas of application that are (completely) different from that of a tyre.

The embodiments described herein may be combined without departing from the scope of protection of the present invention.

The test method described above has many advantages.

Firstly, the test method described above is very effective (that is to say that it exhibits high precision and high reliability) insofar as the results provided by the test method described above correspond very faithfully to results that may be encountered with actual tyres. This significant result is obtained by virtue of the fact that the support 11 is exactly subjected (very accurately) to the same deformations whereto the component (the lateral wall 7) of the tyre 1, that integrates the transponder 8, is subjected in use by virtue of the fact that it deforms the support 11 by using working surfaces 17 and 20 that are conformed according to the three-dimensional form F1 and F2 (determined based upon the actual deformations of the tyre 1).

Furthermore, the test method described above is also very efficient insofar as it makes it possible to perform tests in a very fast and cost effective manner. In particular, the implementation of the support 11 is simple and rapid (it is basically a matter of making a rectangular rubber strip with dimensions of the order of 75 x 25 mm, wherein the transponder 8 is internally arranged). Furthermore, a test may be performed much quicker than an *"on the road"* test using an actual tyre 1: the actuator 21 may operate at 50-70 Hz which corresponds to a road speed of 400-500 km/h (therefore many times faster than an *"on the road"* test using an actual tyre 1).

Finally, the test system 9 described above is simple and economical to implement insofar as it calls for the use of components that are easily found on the market at no great cost; in particular, the fixed base 16 and the deforming body 19 (having the respective working surfaces 17 and 20 that must have the three-dimensional forms F1 and F2) may be manufactured from a plastic material by means of additive manufacturing (3D printing) with low lead times and reduced manufacturing costs (to this end it is important to note that the fixed base 16 and the deforming body 19 are not subjected to elevated mechanical stresses and they may, therefore, also be manufactured using conventional plastic materials.

### List of reference numbers in the figures

- 1: tyre
- 2: carcass
- 3: beads
- 4: tread
- 5: tread belt
- 6: innerliner
- 7: sidewalls
- 8: transponder
- 9: test system
- 10: closed chamber
- 11: support
- 12: deforming unit
- 13: reader
- 14: antenna
- 15: control device
- 16: fixed base
- 17: working surface
- 18: pass-through opening
- 19: deforming body
- 20: working surface
- 21: actuator
- 22: retaining element
- 23: heating device
- F1: three-dimensional form
- F2: three-dimensional form

## Claims

1. Method for testing the resilience of an electronic device (8) that is subjected in use to periodic deformations and that is intended to be coupled to at least one component of an elastic body, preferably a tyre (1); the test method comprises the steps of:
making a support (11) containing the electronic device (8);
subjecting the area of the support (11) wherein the electronic device (8) is arranged to a series of cyclical deformations; and
detecting the operation of the electronic device (8) during the cyclical deformations of the support (11);
the test method is **characterized in that** it comprises the further steps of:
determining a first form (F1) that the component assumes in use;
determining a second form (F2) that the component assumes in use and that is different than the first form (F1);
cyclically deforming the area of the support (11) wherein the electronic device (8) is arranged in order to cause the area of the support (11) to assume the form (F1) and the second form (F2).

2. Test method according to claim 1, wherein the support (11) is rested upon a first working surface (17) of a base (16) that reproduces the first form (F1);

3. Test method according to claim 2, wherein the base (16) has a through opening (18) wherethrough a deforming body (19) is arranged having a second working surface (20) that reproduces the second form (F2) and that is facing the support (11).

4. Test method according to claim 3 and comprising the further step of imparting an alternating movement to the deforming body (19) causing the deforming body (19) to cyclically press against the support (11) in order to deform the support (11).

5. Test method according to claim 2, 3 or 4 and comprising the further step of constraining two opposite ends of the support (11) to the base (16);

6. Test method according to claim 5, wherein the ends of the support (11) are constrained to the base (16) by means of a corresponding retaining element (22) that clamps the ends of the support (11) to the base (16)

7. Test method according to claim 6, wherein each retaining element (22) is screwed to the base (16);

8. Test method according to any one of the claims from 2 to 7, wherein the base (16) has the form of a frame.

9. Test method according to any one of the claims from 1 to 8, wherein the first form (F1) has an average radius of curvature that is greater than the average radius of curvature of the second form (F2).

10. Test method according to any one of the claims 1 to 9 and comprising the further steps of:
arranging the support (11) within a closed chamber (10).
adjusting the closed chamber (10) to a predetermined test temperature, preferably by introducing warm or cold air into the closed chamber (10).

11. Test method according to any one of the claims from 1 to 10, wherein the elastic body is a tyre (1).

12. Test method according to claim 11, wherein:
the tyre component (1) assumes the first form (F1) when it is far from footprint on the ground; and
the tyre component (1) assumes the second form (F1) when it is at the footprint on the ground.

13. System (9) for testing the resilience of an electronic device (8) that is subjected in use to periodic deformations and that is intended to be coupled to at least one component of an elastic body, preferably a tyre (1); the test system comprises:
a deforming unit (12) configured in order to subject a support (11) containing the electronic device (8) to a series of cyclical deformations; and
a reader (13) for detecting the operation of the electronic device (8) during the cyclical deformations of the support (11);
the test system (9) is **characterized in that** the deforming unit (12) is configured in order to cyclically deform an area of the support 11, wherein the electronic device (8) is arranged in a way cause said area of the support (11) to alternatively assume a first form (F1) which the component assumes in use and the second form (F2) which the component assumes and that is different from the first form (F1).

## Patentansprüche

1. Verfahren zum Prüfen der Widerstandsfähigkeit einer elektronischen Vorrichtung (8), die im Gebrauch periodischen Verformungen ausgesetzt ist und die dazu bestimmt ist, an mindestens eine Komponente eines elastischen Körpers, vorzugsweise einen Reifen (1), gekoppelt zu werden; wobei das Prüfverfahren die Schritte umfasst zum:
Herstellen einer Halterung (11), die die elektronische Vorrichtung (8) enthält;
Aussetzen des Bereichs der Halterung (11), in dem die elektronische Vorrichtung (8) angeordnet ist, einer Reihe von zyklischen Verformungen; und
Erfassen des Betriebs der elektronischen Vorrichtung (8) während der zyklischen Verformungen der Halterung (11);
wobei das Prüfverfahren **dadurch gekennzeichnet ist, dass** es die weiteren Schritte umfasst zum:
Bestimmen einer ersten Form (F1), die die Komponente im Gebrauch annimmt;
Bestimmen einer zweiten Form (F2), die die Komponente im Gebrauch annimmt und die sich von der ersten Form (F1) unterscheidet;
zyklischen Verformen des Bereichs der Halterung (11), wobei die elektronische Vorrichtung (8) angeordnet ist, um zu bewirken, dass der Bereich der Halterung (11) die Form (F1) und die zweite Form (F2) annimmt.

2. Prüfverfahren nach Anspruch 1, wobei die Halterung (11) auf einer ersten Arbeitsoberfläche (17) einer Basis (16) aufliegt, die die erste Form (F1) reproduziert.

3. Prüfverfahren nach Anspruch 2, wobei die Basis (16) eine Durchgangsöffnung (18) aufweist, durch welche ein Verformungskörper (19) angeordnet ist, der eine zweite Arbeitsoberfläche (20) aufweist, die die zweite Form (F2) reproduziert und die der Halterung (11) zugewandt ist.

4. Prüfverfahren nach Anspruch 3 und umfassend den weiteren Schritt des Ausübens einer alternierenden Bewegung auf den Verformungskörper (19), wodurch der Verformungskörper (19) zyklisch gegen die Halterung (11) drückt, um die Halterung (11) zu verformen.

5. Prüfverfahren nach Anspruch 2, 3 oder 4 und umfassend den weiteren Schritt des Fixierens von zwei gegenüberliegenden Enden der Halterung (11) an der Basis (16).

6. Prüfverfahren nach Anspruch 5, wobei die Enden der Halterung (11) an der Basis (16) mittels eines entsprechenden Halteelements (22) befestigt sind, das die Enden der Halterung (11) an der Basis (16) festklemmt.

7. Prüfverfahren nach Anspruch 6, wobei jedes Halteelement (22) an die Basis (16) geschraubt ist.

8. Prüfverfahren nach einem der Ansprüche 2 bis 7, wobei die Basis (16) die Form eines Rahmens hat.

9. Prüfverfahren nach einem der Ansprüche 1 bis 8, wobei die erste Form (F1) einen mittleren Krümmungsradius aufweist, der größer ist als der mittlere Krümmungsradius der zweiten Form (F2).

10. Prüfverfahren nach einem der Ansprüche 1 bis 9 und umfassend die weiteren Schritte zum:
Anordnen der Halterung (11) innerhalb einer geschlossenen Kammer (10);
Einstellen der geschlossenen Kammer (10) auf eine vorbestimmte Prüftemperatur, vorzugsweise durch Einleiten von warmer oder kalter Luft in die geschlossene Kammer (10).

11. Prüfverfahren nach einem der Ansprüche 1 bis 10, wobei der elastische Körper ein Reifen (1) ist.

12. Prüfverfahren nach Anspruch 11, wobei:
die Reifenkomponente (1) die erste Form (F1) annimmt, wenn sie weit von der Aufstandsfläche auf dem Boden entfernt ist; und
die Reifenkomponente (1) die zweite Form (F1) annimmt, wenn sie sich an der Aufstandsfläche auf dem Boden befindet.

13. System (9) zum Prüfen der Widerstandsfähigkeit einer elektronischen Vorrichtung (8), die im Gebrauch periodischen Verformungen ausgesetzt ist und die dazu bestimmt ist, an mindestens eine Komponente eines elastischen Körpers, vorzugsweise einen Reifen (1), gekoppelt zu werden; wobei das Prüfsystem umfasst:
eine Verformungseinheit (12), die konfiguriert ist, um eine Halterung (11), die die elektronische Vorrichtung (8) enthält, einer Reihe von zyklischen Verformungen auszusetzen; und
ein Lesegerät (13) zum Erfassen des Betriebs der elektronischen Vorrichtung (8) während der zyklischen Verformungen der Halterung (11);
wobei das Prüfsystem (9) **dadurch gekennzeichnet ist, dass** die Verformungseinheit (12) konfiguriert ist, um einen Bereich der Halterung (11) zyklisch zu verformen, wobei die elektronische Vorrichtung (8) so angeordnet ist, dass sie bewirkt, dass der Bereich der Halterung (11) abwechselnd eine erste Form (F1), welche die Komponente im Gebrauch annimmt, und die zweite Form (F2), welche die Komponente annimmt und die sich von der ersten Form (F1) unterscheidet, annimmt.

## Revendications

1. Procédé d'essai de la résilience d'un dispositif électronique (8) qui est soumis, en utilisation, à des déformations périodiques et qui est destiné à être accouplé à au moins un composant d'un corps élastique, de préférence un pneu (1) ; le procédé d'essai comprend les étapes consistant à :
fabriquer un support (11) contenant le dispositif électronique (8) ;
soumettre la zone du support (11) dans laquelle le dispositif électronique (8) est disposé à une série de déformations cycliques ; et
détecter le fonctionnement du dispositif électronique (8) pendant les déformations cycliques du support (11) ;
le procédé d'essai est **caractérisé en ce qu'il** comprend les étapes supplémentaires consistant à :
déterminer une première forme (F1) que le composant adopte en utilisation ;
déterminer une seconde forme (F2) que le composant adopte en utilisation et qui est différente de la première forme (F1) ;
déformer cycliquement la zone du support (11) dans laquelle le dispositif électronique (8) est disposé afin d'amener la zone du support (11) à adopter la forme (F1) et la seconde forme (F2).

2. Procédé d'essai selon la revendication 1, dans lequel le support (11) repose sur une première surface de travail (17) d'une base (16) qui reproduit la première forme (F1).

3. Procédé d'essai selon la revendication 2, dans lequel la base (16) a une ouverture traversante (18) à travers laquelle un corps de déformation (19) est disposé de façon à avoir une seconde surface de travail (20) qui reproduit la seconde forme (F2) et qui fait face au support (11).

4. Procédé d'essai selon la revendication 3 et comprenant l'étape supplémentaire consistant à communiquer un mouvement alternatif au corps de déformation (19), amenant le corps de déformation (19) à appuyer cycliquement contre le support (11) afin de déformer le support (11).

5. Procédé d'essai selon la revendication 2, 3 ou 4 et comprenant l'étape supplémentaire consistant à limiter deux extrémités opposées du support (11) à la base (16).

6. Procédé d'essai selon la revendication 5, dans lequel les extrémités du support (11) sont limitées à la base (16) au moyen d'un élément de retenue (22) correspondant qui serre les extrémités du support (11) à la base (16).

7. Procédé d'essai selon la revendication 6, dans lequel chaque élément de retenue (22) est vissé sur la base (16).

8. Procédé d'essai selon l'une quelconque des revendications 2 à 7, dans lequel la base (16) a la forme d'un cadre.

9. Procédé d'essai selon l'une quelconque des revendications 1 à 8, dans lequel la première forme (F1) a un rayon de courbure moyen qui est supérieur au rayon de courbure moyen de la seconde forme (F2).

10. Procédé d'essai selon l'une quelconque des revendications 1 à 9 et comprenant les étapes supplémentaires consistant à :
disposer le support (11) à l'intérieur d'une chambre fermée (10),
ajuster la chambre fermée (10) à une température d'essai prédéterminée, de préférence en introduisant de l'air chaud ou froid dans la chambre fermée (10).

11. Procédé d'essai selon l'une quelconque des revendications 1 à 10, dans lequel le corps élastique est un pneu (1).

12. Procédé d'essai selon la revendication 11, dans lequel :
le composant de pneu (1) adopte la première forme (F1) lorsqu'il est éloigné d'une empreinte au sol ; et
le composant de pneu (1) adopte la seconde forme (F1) lorsqu'il est situé au niveau de l'empreinte au sol.

13. Système (9) d'essai de la résilience d'un dispositif électronique (8) qui est soumis, en utilisation, à des déformations périodiques et qui est destiné à être accouplé à au moins un composant d'un corps élastique, de préférence un pneu (1) ; le système d'essai comprend :
une unité de déformation (12) conçue pour soumettre un support (11) contenant le dispositif électronique (8) à une série de déformations cycliques ; et
un lecteur (13) destiné à détecter le fonctionnement du dispositif électronique (8) pendant les déformations cycliques du support (11) ;
le système d'essai (9) est **caractérisé en ce que** l'unité de déformation (12) est conçue pour déformer cycliquement une zone du support 11, dans lequel le dispositif électronique (8) est disposé de manière à amener ladite zone du support (11) à adopter alternativement une première forme (F1) que le composant adopte en utilisation et la seconde forme (F2) que le composant adopte et qui est différente de la première forme (F1).
